(19) Europäisches Patentamt
European Patent Office
Office européen des brevets

(11) EP 1 505 101 B1

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(51) Int Cl.:
***C08G 77/16*** *(2006.01)* ***C08K 5/54*** *(2006.01)*
***C10M 107/50*** *(2006.01)*

(21) Anmeldenummer: **04017439.3**

(22) Anmeldetag: **23.07.2004**

(54) **Verwendung organomodifizierter Siloxane zur Oberflächenmodifizierung von Polyolefinen und für Polyamidfolien**

Use of organomodified siloxanes as surface modifying agents for polyolefins and for polyamid films

Appuy d'une silicone organomodifié comme agent modificateur de surface de polyoléfines et de films de polyamides

(84) Benannte Vertragsstaaten:
**DE ES FR GB IT NL**

(30) Priorität: **05.08.2003 DE 10335761**

(43) Veröffentlichungstag der Anmeldung:
**09.02.2005 Patentblatt 2005/06**

(73) Patentinhaber: **Goldschmidt GmbH**
**45127 Essen (DE)**

(72) Erfinder:
- **Bechthold, Nina, Dr.**
**45147 Essen (DE)**
- **Scheiba, Manfred**
**45138 Essen (DE)**
- **Stadtmüller, Stefan, Dr.**
**45381 Mülheim (DE)**
- **Weimann, Markus**
**46240 Bottrop (DE)**

(56) Entgegenhaltungen:
**EP-A- 0 114 311**
**EP-A- 1 041 454**
**US-A- 4 652 489**
**US-A- 4 734 317**
**US-A1- 2002 064 646**

EP 1 505 101 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft die Verwendung organomodifizierter Siloxane als Additive, die bei der Einarbeitung in Polyolefine zu einer permanenten Verbesserung der Oberflächeneigenschaften von Polyolefinfolien führen, ohne dass durch Ausblühvorgänge negative Folgen bei nachgeschalteten Arbeitsschritten zu erwarten sind.

Polyolefine werden für industrielle und private Bereiche heutzutage weltweit in vielfältigen Anwendungsbereichen als Oberflächenbeschichtungen, Verpackungsmaterialien und Formteile verwendet. Neben dem Einsatz als Ausgangsmaterial für Spritzgussartikel, dienen Polyolefine im Besonderen für die Herstellung von Folien zu Schutz- und Verpackungszwecken.

Eine wichtige Voraussetzung für die Gebrauchsfähigkeit von diesen Polymeren bei der privaten und gewerblichen Nutzung ist, dass die Oberflächeneigenschaften den technischen und mechanischen Anforderungen der jeweiligen Anwendung genügen. Insbesondere sind dies Gleitfähigkeit und Trennwirkung sowie Oberflächenkratzfestigkeit und Abriebresistenz.

Zur Erzielung dieser Effekte wurden in der Vergangenheit bereits eine Reihe von Additiven zur Einarbeitung in die Polymeren vorgeschlagen. So wurde zur Verbesserung der Gleiteigenschaften von Polyethylen neben den bekannten Fluorpolymeren mehr oder weniger migrierfähige Additive, wie Fettsäureamide oder Polyolfinwachse verwendet oder äußere Gleitmittel appliziert (Chapman, Handbook of Plastics Additives; Gaechter, Müller, Kunststoffadditive, Carl-Hanser Verlag).

Seit einiger Zeit finden Additive auf Siliconölbasis, als Polymermasterbatche, Verwendung. Diese sind vielfach beschrieben und z.B. unter der Bezeichnung MB 50 von Dow Corning erhältlich. Es handelt sich bei dieser Siliconkomponente um ultrahochmolekulare nichtfunktionelle Siliconöle mit Molekulargewichten von 40.000 bis 400.000 die in einem Polymerträger verarbeitet sind. In empfohlenen Einsatzkonzentrationen von bis zu 2 % verbessern diese Additive als inneres und äußeres Gleitmittel die Prozesseigenschaften des Polymers bei der Verarbeitung. Die Rückhaltung des Siloxans im Polymer ist durch das hohe Molekulargewicht bedingt. Die Mobilität, sprich Migration wird zwar gehemmt, ist aber letztlich nicht ganz auszuschließen, weshalb eine Beeinträchtigung der Haftung auf Additive enthaltenden Substraten zu befürchten ist. Negativ ist auch der Effekt, dass es bei Überschreitung der Löslichkeitsgrenze des Additivs im Polymer zu Ausblüherscheinungen (blooming) kommt. Dies zeigt sich in der Bildung von Oberflächenbelägen. Probleme beim Beschichten (verringerte Hafteigenschaften), Bedrucken oder Lackieren können die Konsequenzen sein.

In der EP-B-0 868 460 sind klare kratzfeste Beschichtungszusammensetzungen (top coats) beschrieben, die im Wesentlichen Acrylosilanpolymere zur Kratzfestmachung enthalten.

Strahlenhärtende Beschichtungen sind bekannt und beispielsweise in "UV & EB curing formulation for printing inks, coatings & paints" (R. Holman, P. Oldring, London 1988) beschrieben.

Die vor allem für Papierbeschichtungen häufig verwendeten Epoxyacrylate werden aufgrund der raschen Härtung sowie der erzielbaren Härte und Chemikalienbeständigkeit geschätzt. Für hochwertige Beschichtungen werden auch Urethanacrylate eingesetzt, die neben einer verbesserten Flexibilität insbesondere ein ausgezeichnetes Benetzungsverhalten sowie Chemikalienresistenz und Härte bedingen.

Polysiloxane, die Acrylatsäureestergruppen (Acrylatgruppen) enthalten, haben sich als unter energiereicher Strahlung härtbare Additive, z.B. für Druckfarben und zur Herstellung von Lackbindemitteln oder für Beschichtungsmittel für Kunststoff-, Papier, Holz- und Metalloberflächen, bewährt. Die Härtung erfolgt insbesondere durch UV-Strahlung (nach Zusatz bekannter Photoinitiatoren, wie z.B. Benzophenon und seiner Derivate) oder durch Elektronenstrahlung.

In allen Fällen ist die Auftragung von externen Siloxanschichten auf vorgefertigten Kunststoffteilen dagegen mit einem zusätzlichen Arbeitschritt verbunden, der neben erhöhter Fertigungskosten auch das Ausschussrisiko erhöht.

Gemäß der Patentanmeldung EP-A-1 211 277 können auch siloxanmodifizierte Polyolefine Additive für Polyolefine zur Verbesserung der Oberflächenkratzfestigkeit, Trennwirkung, Abriebresistenz, Witterungsbeständigkeit und Hydrophobierung sein. Gemäß dieser Patentanmeldung finden diese Substanzen Verwendung als Prozesshilfsmittel bei der Herstellung von Polyolefinfolien, insbesondere Polyethylenfolien zur Unterdrückung von Schmelzbruchverhalten.

In der Verpackungsindustrie ist darauf zu achten, dass durch den Additivzusatz dem Erzeugnis in möglichst kurzer Zeit ein Release-Effekt verliehen wird, so dass aufgeklebte Etiketten oder Codierungen nachträglich ohne Beschädigung des Erzeugnisses entfernt werden können.

Es besteht daher in der Praxis ein Bedarf an Additiven, welche in geringen Konzentrationen die Handhabbarkeit von insbesondere serienmäßig bedruckten Gegenständen verbessern, wobei diese Zusatzmittel insbesondere die Kratzfestigkeit der frischen Oberflächen verbessern, deren Gleitfähigkeit erhöhen, sehr rasch nach Vernetzung eine hohe Release-Wirkung aufweisen und aufgrund ihrer Vernetzung stationär im Film verbleiben.

Für die Modifizierung von Folien werden auch handelsübliche Fluorpolymere eingesetzt, die ebenfalls die Oberflächencharakteristik beeinflussen. Zugesetzt werden Mengen von 0,05 bis 0,1 Gew.-%. Diese Additive bewirken eine höhere Produktivität und eine dadurch bedingte geringere Temperaturbelastung der Polymere. Des Weiteren resultiert die Zugabe dieser Additive in einer Hydrophobierung der Oberfläche der Polymere. Diese Polymere haben jedoch verfahrenstechnische Nachteile. Um vollständige Wirksamkeit zu erlangen, ist die Ausbildung eines Films zwischen

Polymerschmelze und Metalloberfläche notwendig, die eine Konditionierung erforderlich macht.

Folien mit Release-Wirkung auf Basis von Siliconölen oder Halogenverbindungen sind normalerweise nicht versiegelbar, d.h. verschweißbar. Siegelbar oder Verschweißbarkeit ist im Anwendungsbereich Verpackungen aber ein wichtiges Kriterium. Bei Mitverwendung der erfindungsgemäßen Verbindung ist es überraschenderweise erstmals möglich, siegelbare Folien mit gleichzeitigem Release-Effekt herzustellen.

Aufgabenstellung:

Aufgabe der vorliegenden Erfindung war es Oberflächen von Folien, hergestellt aus thermoplastischen Polymeren, durch Einarbeitung geeigneter Additive positiv zu modifizieren. Insbesondere sollten Reibungsverhalten, Trenneigenschaften begünstigt werden, ohne dass dabei Siegelfähigkeit oder Bedruckbarkeit negativ beeinflusst werden. Daher ist es eine wesentliche Voraussetzung, dass Migrationsvorgänge weitestgehend unterdrückt werden.

Überraschenderweise wurde diese Aufgabe gelöst durch Verwendung von organomodifizierten Polysiloxanen, die langkettige aliphatische Reste angelagert haben. Derartige erfindungsgemäße Additive zeichnen sich durch eine stark veringerte Migrierfähigkeit, die sonst bei ähnlichen Verbindungen bemängelt wird, aus und führen zu oben ausgeführter positiver Ausrüstung der Folienoberfläche.

Ein Gegenstand der Erfindung ist die Verwendung von organomodifizierten Polysiloxanen der allgemeinen Formel (I)

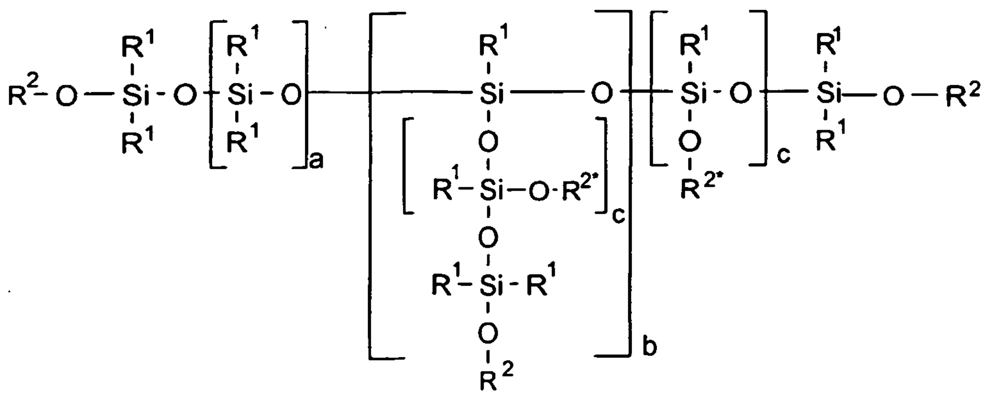

worin

| | |
|---|---|
| $R^1$ | unabhängig voneinander aliphatische oder aromatische $C_{1-20}$-Kohlenwasserstoffreste, |
| $R^2$, $R^{2*}$ | unabhängig voneinander aliphatische Kohlenwasserstoffreste mit $\cong C_{18}$ bis $\cong C_{100}$ in statistischer Verteilung sind und ca. 50 bis70 Ges.-% der Gesamtverteilung ausmachen, |
| a = | 1 bis 500, |
| b = | 0 bis 50, |
| c = | 0 bis 50 |

sind, als Additive zur Oberflächenvergütung in Polyolefinen und für Folien, hergestellt aus Polyamiden.

Unabhängig voneinander bedeutet, dass sowohl Reste $R^2$ als auch die Reste $R^{2*}$ jeder für sich gleich oder verschieden sein können.

In den erfindungsgemäß bevorzugten organomodifizierten Polysiloxanen sind mindestens 90 % der Reste $R^1$ Methylreste.

Die Reste $R^2$ und $R^{2*}$ sind die Kohlenwasserstoffreste des im Herstellungsprozess mitverwendeten Alkohols. Sie können einheitliche Reste mit definierter Kettenlänge sein, wie beispielsweise die Reste von $C_{8-22}$-Fettalkoholen oder eine Mischung mit unterschiedlicher Kettenlänge im Bereich von ca. $C_{8-60}$, worin die Kettenlängen von $\cong C_{18}$ bis $\cong C_{100}$ durchschnittlich 50 bis 70 Gew.-% der Gesamtverteilung ausmachen. Bevorzugt mit $R^2$,$R^{2*}$ aliphatische Kohlenwasserstoffreste mit $\cong C_{20}$ bis $C_{40}$. Mischungen dieser Art von Alkoholen sind technische Handelsprodukte. Die erfindungsgemäß mitverwendeten Mischungen weisen eine durchschnittliche Verteilung auf von

ca. < 4 Gew.-% < $C_{18}$,
ca. 50 bis 80 Gew. -% $C_{18-40}$,
ca. 16 bis 46 Gew.-% > $C_{40}$.

Es ist dem Fachmann geläufig, dass die Verbindungen der allgemeinen Formel (I) in Form eines Gemisches mit blockweiser Verteilung oder einer im Wesentlichen durch statistische Gesetze geregelten Verteilung vorliegen können, worin die Werte für die Indices Mittelwerte darstellen.

Die erfindungsgemäßen mitverwendeten Verbindungen der allgemeinen Formel (I) können nach an sich bekannten Verfahren des Standes der Technik durch Kondensation- oder Umesterungsreaktion, hergestellt werden, wie beispielsweise in der US-5 147 965 oder der EP-B-0 475 440 beschrieben. Erfindungsgemäß bevorzugt werden jedoch Verbindungen, welche gemäß Verfahren der dehydrogenativen Kupplung, wie in den nicht veröffentlichten Anmeldungen mit dem Aktenzeichen DE-103 12 634.1 und DE-103 12 636.8 beschrieben, hergestellt werden.

Durch die Herstellung der organomodifizierten Siloxane durch die bevorzugte Technik einer salzfreien Kupplungsreaktion, ist die Substanz frei von Chloridionen. Daher ist die Gefahr einer Hydrolyse der Si-O-C-Verbindung gebannt, so dass sicher gestellt ist, dass kein freies Siliconöl im Produkt enthalten ist, welches zu Migrationen führt.

Ein weiterer Gegenstand der Erfindung ist die Verwendung der Verbindungen gemäß der allgemeinen Formel (I) als Prozessadditive bei der Herstellung von Polymerformulierungen. Auf Grund der überraschend großen Verträglichkeit der erfindungsgemäßen Verbindungen mit den Polymeren bleiben sie dauerhaft stabil in homogener Verteilung.

Dank dieser Eigenschaft ist es erstmals möglich Blas- und Flachfolien herzustellen, welche ausgezeichnete Gleit- und Release-Eigenschaften aufzeigen.

Zur Herstellung solcher Folien muss gemäß bekanntem Stand der Technik ein zwei-Stufen-Verfahren angewandt werden, bei dem in erster Stufe die Folien hergestellt werden, auf welche dann in einem separaten Arbeitsgang zusätzliche Beschichtungen mit Release-Eigenschaften aufgebracht werden müssen.

Mit Hilfe der erfindungsgemäßen Verbindungen ist dieser zweite Schritt nun nicht mehr erforderlich. Die Verbindungen werden in den erforderlichen Anteilen dem Polymergranulat zugemischt und wie nachstehend beschrieben, kompoundiert.

Das resultierende Polymergranulat mit dem organisch modifizierten Siloxan kann direkt als Trennbeschichtung (Monofilm, coextrudierter Film, laminierter Film oder coextrudierter beschichteter Flor), mit den in der Industrie üblichen Verfahren der Folienextrusion bzw. Foliencoextrusion aufgebracht werden. Dieser Film kann mittels Blasfolienextrusion, Flachfolienextrusion oder Extrusionsbeschichtung hergestellt werden.
Ähnliche Verfahren sind aus dem Stand der Technik bekannt mit Halogenverbindungen, insbesondere Fluorverbindungen.

Vorteil erfindungsgemäßer Polysiloxane ist die Möglichkeit, diese, durch dem Fachmann geläufige Prozessschritte, homogen verteilt im Polymer einzuarbeiten, wodurch Ablagerungen an der Oberfläche des Films vermieden werden. Siegelfähigkeit, Bedruckbarkeit oder Verschweißbarkeit der Folien, die mit erfindungsgemäßer Polysiloxane ausgerüstet wurden, sind somit nicht negativ beeinflusst. Ebenso wird die Ablagerung an den Oberflächen der Verarbeitungsmaschinen, z.B. der Extruder, vermieden und aufwendige Verfahren zur Reinigung sind nicht nötig. Ein weiterer Vorteil erfindungsgemäßer Polysiloxane besteht in ihrer Salzfreiheit, die schon bei der Herstellung zum Tragen kommt und ein aufwendiges Abtrennen gebildeter Salze etwa durch Filtration vermeidet. Dieser Vorteil kommt ebenso beim Einsatz dieser erfindungsgemäßen Polysiloxane zum Tragen, da durch Restgehalte an Chloridionen hervorgerufene Abbaureaktionen nicht aufreten können.

Beispiele:

Typische Einsatzkonzentrationen, bei denen Vorteile der erfindungsgemäßen Verbindungen offensichtlich werden, sind im Bereich von 0,01 bis 5 Gew.-%, vorzugsweise im Bereich von 0,1 bis 2,0 Gew.-%, bezogen auf das Polyolefin.

Die Herstellung der Compounds, die erfindungsgemäße organomodifizierte Siloxane enthalten, erfolgt dem Fachmann geläufig in einem zweistufigem Verfahren.
Dabei wird das Polymer mit dem organomodifizierten Siloxan und möglichen anderen Inhaltstoffen, wie z.B. Pigmenten, Füllstoffen und anderen Additiven, wie z.B. Antioxidantien oder Antistatik-Additiven vorgemischt. Zur Vormischung dienen Mischaggregate wie z.b. Henschel-, Taumelmischer oder automatische Dosiersysteme die volumetrisch oder gravimetrisch arbeiten.
Erfindungsgemäße Verbindungen werden anschließend unter der Einwirkung von Scherkräften, z.B. Einarbeitung auf einem Extruder in das Polymer eingebettet. Alternativ ist die Einarbeitung auch in einem Kneter oder unter Aufschmelzen in einem Reaktor denkbar.

Polyolefine, die für die erfindungsgemäßen Verbindungen einsetzbar sind, sind grundsätzlich alle, gegebenenfalls Füllstoffe wie z.B. Kreide, Talkum, Silika, $TiO_2$ enthaltende Polymere, die aus Kohlenwasserstoffen der Formel $C_nH_{2n}$ mit einer Doppelbindung (Ethylen, Propylen, Buten-1, Isobuten) aufgebaut sind. Zu ihnen gehören Polyethylen, Polypropylen, Polybuten-1, Polyisobutylen, Poly-4-methylpenten sowie deren Copolymere. Darüber hinaus sind auch Polyamide einsetzbar.

Die erfindungsgemäß mitverwendeten Verbindungen werden im geschmolzenen Zustand unter Rühren im Reaktor oder mittels Extruder in das Polymer eingebracht.

Herstellung der Compounds:

Vor der Extrusion wurde eine homogene Mischung der Additive mit dem Polymer hergestellt. Die Wahl der Mischmethode war abhängig von der Konfektionsart und des Aggregatzustandes des Additivs.

Für die Austestung nicht erfindungsgemäßer Verbindungen wurden kommerziell erhältliche Produkte eingesetzt wie in Tabelle 1 beschrieben. Die erfindungsgemäßen Beispiele 7 und 8 wurden zuvor in einer Synthese produziert. Die Herstellvorschrift ist exemplarisch anhand Beispiel 7 im Folgenden beschrieben.

Die Vormischung der festen Additive (Pellet- oder Pulverform) wurde manuell durchgeführt. Hierbei wurde das Additiv in das Polymer von Hand 5 min eingerührt. Flüssige Additive wurden in einem Taumelmischer des Typs Fabrikat Engelmann, Typ Mini 80 auf das Polymergranulat mit 100 U/min aufgezogen und danach mit der Dosierwaage dem Extruder zugegeben.

Die Vormischungen (1,5 kg) werden in einem Taumelmischer (Fabrikat Engelmann, Typ Mini 80) hergestellt. Dazu wird die entsprechende Menge Additiv (1 bis 10 phr) mit dem Trägerpolymer abgemischt. Mischungen von Polymergranulat und Additiven in Pulver-, Granulat- und Pelletform sind für die Dosiereinrichtungen problemlos.

Extrusion am Doppelschneckenextruder:

Die Additive wurden mit einem gleichläufigen Doppelschneckenextruder Modell Micro 27 der Fa. Leistritz homogen in das Polymer eingemischt. Der Extruder ist aus insgesamt neun einzelnen Zylinderzonen und einer Einzugszone aufgebaut. Die Heizungen werden über Temperaturregler gesteuert. Die Temperaturabweichungen sind sehr gering (maximal 2 bis 3 °C). Die Einzugszone wird mit Leitungswasser gekühlt. Die Düse des Extruders ist beheizbar. Der Extruder ist mit einer Zylinderentgasungszone (atmosphärisch und Vakuum) ausgestattet. Dies ist bei einem Doppelschneckenextruder wichtig, damit der Extruder mit einem höheren Durchsatz "gefahren" werden kann, um Lufteinschlüsse zu verhindern.

Die Dosierung des Granulats mit Additiv erfolgt mit einer Dosier-Differentialwaage vom Typ DDW-$H_2O$ der Fa. Brabender. Diese Waage eignet sich sowohl für die kontinuierliche, gravimetrische Dosierung als auch für schlecht rieselfähige pulvrige bis faseriger Schüttgüter. Bei allen Versuchen, in denen mit Hilfe der Dosierwaage das Granulat mit Additiv zudosiert wurde, kam ein Einschneckenmodul mit Trogrührwerk zum Einsatz.

Die zugegebene Wirkstoffkonzentration lag bei 0,01 bis 1 phr. Die Drehzahl des Extruders wurde bei jedem Compound auf 200 rpm eingestellt und durch die variable Zugabe der Dosierwaage wurde der Durchsatz bei 6 kg/h gehalten.

Folienextrusion:

Für die Herstellung von Blasfolien wird das Polymer in einem Extruder plastifiziert und ringförmig in einem Blaskopf als heißer Schlauch extrudiert (Plasti-Corder LabStation mit Messextruder 19/25D mit Blasfolieneinheit, Brabender). Der Abzug der Blasfolie erfolgt nach oben. Anschließend wird die Folie flachgelegt und durch ein Walzenpaar abgezogen. Die Folie kann als Schlauch, Seitenfaltschlauch sowie nach Aufschneiden als Halbschlauch oder Flachfolie gewickelt werden. Übliche Parameter für PP und PE-LD waren:

- PP bei 220 bis 240 °C, PE bei 135 bis 170 °C bei 40 bis 50 rpm,
- Abzugsgeschwindigkeit 300 bis 400 cm/min,
- Luftregelung 8 bis 10 l/h.

Anwendungstechnische Überprüfung:

(1) Bestimmung des Schmelzindex MFI:

Die Schmelzflussmessung wurde an dem Gerät Meltfixer® der Firma SWO Polymertechnik durchgeführt. Zur Probenvorbereitung wurde das Polymergranulat vor der Messung 2 h bei 60 °C getrocknet. Bei der Prüfung des Compounds wurde die vorgegebene Probemasse (3 bis 8 g) in den auf Prüftemperatur vorgeheizten Zylinder eingefüllt, verdichtet und vorgewärmt (5 bis 15 min). Danach wurde mit dem für die jeweilige Prüfung vorgeschriebenem Gewicht der Kolben belastet. Von dem austretenden Strang wurden in konstant gehaltenen Zeitabständen (5 bis 240 s, je nach Fließfähigkeit) Abschnitte gleicher Länge im Bereich von 10 bis 20 mm abgetrennt. Nach der Abkühlung sind die Extrusionsabschnitte auf 0,001 g genau gewogen worden. Der Schmelzindex wurde wie folgt berechnet:

$$MFI = \frac{m \cdot 600}{t}$$

m Masse der Extrudatabschnitte;
t in sec Auslaufzeit der Extrudatabschnitte;
600 Faktor für Bezugszeit von 10 min.

(2) Messung der Gleitreibung (COF):

Die Erfassung der Gleitreibung erfolgt in Anlehnung an DIN 53 375, ISO 8295
- Bestimmung des Reibungsverhaltens-.
Die Messung wurde an Schlauchfolie (Abmessungen: 300 x 70 mm, Dicke 50 μm) durchgeführt.

- Gleitzylinder 520 g, Querschnitt 12,6 $mm^2$, Edelstahl
- Messstrecke 150 mm
- Geschwindigkeit 12 mm/sec.

Andere Messungen zur Gleitreibung wurden an Folien (Abmessungen: 300 x 70 mm, Dicke 50 μm) durchgeführt.

- Gleitzylinder 520 g, Querschnitt 12,6 $mm^2$, Gleitmedium Normfilz
- Messstrecke 200 mm
- Geschwindigkeit 12 mm/sec.

Die Gleitreibung wurde unmittelbar nach Herstellung an der spritzfrischen Platte und nach Aufbewahrung (7 Tage bei 20 °C) gemessen.

(3) Messung der Trenneigenschaften (Release):

Trennwert:

Für die Ermittlung der Trennwerte werden verschiedene, 25 mm breite Klebebänder der Firma Beiersdorf verwendet, und zwar ein mit Kautschukkleber beschichtetes Klebeband, welche im Handel unter der Bezeichnung TESA® 4154 erhältlich sind.
Zur Messung der Abhäsivität wird dieses Klebeband auf den Untergrund aufgewalzt und anschließend bei 40 °C unter einem Gewicht von 70 $g/cm^2$ gelagert. Nach 24 Stunden wird die Kraft gemessen, die benötigt wird, um das jeweilige Klebeband mit einer Geschwindigkeit von 30 cm/min unter einem Schälwinkel von 180 ° vom Untergrund abzuziehen. Diese Kraft wird als Trennkraft oder Trennwert bezeichnet. Die allgemeine Testprozedur entspricht im wesentlichen der FINAT Testmethode Nr. 10.

Anwendungsbeispiele:

Eingesetzte Materialien:

A) Eingesetzte Polymere:

Polypropylen-Homopolymer, z.B. Stamylan® 14 E 10, Sabic (MFI = 2,5)
Polyethylen, PE-LD, z.B. Escorene® LD 100 BW, Exxon Mobil (MFI = 2).

B) Eingesetzte Additive:

| Ausgetestete Substanzen | |
|---|---|
| Referenz | ohne Additiv |
| Verbindung 1 | Stearinsäureamid, Crodamide SR (Avokal Handelsgesellschaft mbH) |
| Verbindung 2 | Erucasäureamid, Loxamid E (Cognis) |
| Verbindung 3 | Polyolefinwachs, Tropfpunkt ca. 96 °C, Schmelzviskosität (100°C) < 1000 mPas (Degussa) |
| Verbindung 4 | Siliconwachs, alkylmodifiziert (Tp* 6846; Degussa) |
| Verbindung 5 | Siliconöl, $R^1$-Methyl- und Alkyarylreste (Tp 6870; Degussa) |
| Verbindung 6 | Silicon-Masterbatch (50 Gew.-% Silicon) (Dow Corning) |
| Verbindung 7 | erfindungsgemäße Verbindung, $R^1$-Methylreste, $R^2$-Gemisch aus langkettigen Alkoholen |
| Verbindung 8 | erfindungsgemäße Verbindung, $R^1$-Methylreste, $R^2$-Gemisch aus langkettigen Alkoholen |
| Verbindung 9 | Fluorpolymer, MFI = 5 bis 14 g/10 min, 265 °C, 5 kg, Schmelzpunkt: 110 bis 126 °C, Spezifische Dichte: 1,9 bis 1,96 g/cm$^3$ (Dupont) |
| *Tp = TEGOPREN® , Markenname der Goldschmidt AG | |

Eingesetzte erfindungsgemäße Verbindungen sind Verbindungen 7 und 8. Vergleichbeispiele sind Verbindungen 2 bis 6, 9.

Darstellung der erfindungsgemäßen Verbindungen:

Umsetzungen von Wasserstoffsiloxanen in einer dehydrogenativen Hydrosilylierung unter Mitverwendung von Alkoholen der allgemeinen Formel $R^2$-OH worin $R^2$ eine Mischung aliphatischer Kohlenwasserstoffreste mit $\cong C_{20-40}$ bedeutet. Mischungen dieser Art von Alkoholen sind technische Handelsprodukte. Die erfindungsgemäß mitverwendeten Mischungen weisen eine durchschnittliche Verteilung auf von ca. < 4 Gew.-% < $C_{18}$, ca. 50 bis 80 Gew.-% $C_{18-40}$, ca. 16 bis 46 Gew.-% > $C_{40}$ auf.

<u>Ausführungsbeispiele:</u>

Beispiel 7:

Umgesetzt wurden 54,6 g $Me_2HSiO(SiMe_2O)_{15}SiMe_2H$ (SiH-Wert 1,82 val/kg) mit 45,4 g des oben genannten Alkohols. Der Alkohol wurde mit 10 Massen-% Überschuss eingesetzt. Bei 90 °C wurden 0,51 g Borankatalysator, entsprechend 0,5 Mol-% bezogen auf den SiH-Wert, zugegeben. Die Reaktionstemperatur stieg kurzzeitig auf 102 °C an. Nach 25 min lag der Umsatz, entsprechend der SiH-Wert-Methode bei 100 %. Vor der Filtration über das Tiefenfilter gab man je 1 g N-Methylmorpholin zu.

Erfindungsgemäßes Beispiel 8:

Die Reaktion verlief analog Beispiel 7; als Reaktionspartner wurde $Me_2HSiO(SiMe_2O)_{30}SiMe_2H$ (SiH-Wert 0,92 val/kg) verwendet.

Versuchsergebnisse:

| Polypropylen (Stamylan 14 E 10, MFI 2), Additive 0,5 phr | |
|---|---|
| | Reibungskoeffizient/COF |
| Referenz | 0,40 |
| Verbindung 1 | 0,18 |
| Verbindung 2 | 0,18 |

(fortgesetzt)

| Polypropylen (Stamylan 14 E 10, MFI 2), Additive 0,5 phr | |
|---|---|
| | Reibungskoeffizient/COF |
| Verbindung 3 | 0,32 |
| Verbindung 4 | 0,36 |
| Verbindung 5 | 0,34 |
| Verbindung 6 | 0,30 |
| Verbindung 7 | 0,18 |
| Verbindung 8 | 0,17 |

| Polyethylen (PE-LD, Escorene LD 100 BW, MFI 2), Additive 0,5 phr | |
|---|---|
| | Reibungskoeffizient/COF |
| Referenz | 0,54 |
| Verbindung 1 | 0,39 |
| Verbindung 2 | 0,22 |
| Verbindung 3 | 0,38 |
| Verbindung 4 | 0,44 |
| Verbindung 5 | 0,36 |
| Verbindung 6 | 0,40 |
| Verbindung 7 | 0,29 |
| Verbindung 8 | 0,31 |

| | MFI | Trennwert TESA® 4154 N/2,5 cm |
|---|---|---|
| Referenz | 2,5 | 8,30 |
| Verbindung 1 | 2,3 | 7,90 |
| Verbindung 2 | 2,5 | 8,32 |
| Verbindung 3 | 2,5 | 7,90 |
| Verbindung 4 | 2,7 | 8,19 |
| Verbindung 5 | 2,3 | 8,12 |
| Verbindung 6 | 2,2 | 7,49 |
| Verbindung 7 | 2,5 | 4,97 |
| Verbindung 8 | 2,5 | 4,83 |
| Verbindung 9 | 1,9 | 7,50 |

Wie ersichtlich wird durch Mitverwendung der erfindungsgemäßen Verbindung der Melt-Flow-Index nicht beeinflusst, sondern unverändert in dem produktionstechnisch erforderlichen Bereich beibehalten.

| Verbindung 7 % | Polypropylen (Stamylan 14 E 10, MFI 2) | Polyethylen (PE-LD, Escorene LD 100 BW, MFI 2) | Polypropylen (Stamylan 14 E 10, MFI 2) | Polyethylen (PE-LD, Escorene LD 100 BW, MFI 2) |
|---|---|---|---|---|
| 0 | 1.030 | 717 | 86 | 92 |
| 2 | 558 | 264 | 68 | 89 |
| 3 | 433 | 242 | 70 | 90 |
| 5 | - | 218 | - | 69 |
| 7,5 | - | 156 | - | 56 |
| 10 | - | 115 | - | 50 |

Erhöhte Anteile der erfindungsgemäßen Verbindungen erniedrigen die Trennwerte bis an die technisch akzeptable Grenze der Restklebkraft, wodurch eine äußerst variable Handhabung gewährleistet ist.

## Patentansprüche

1. Verwendung von organomodifizierten Polysiloxanen der allgemeinen Formel (I)

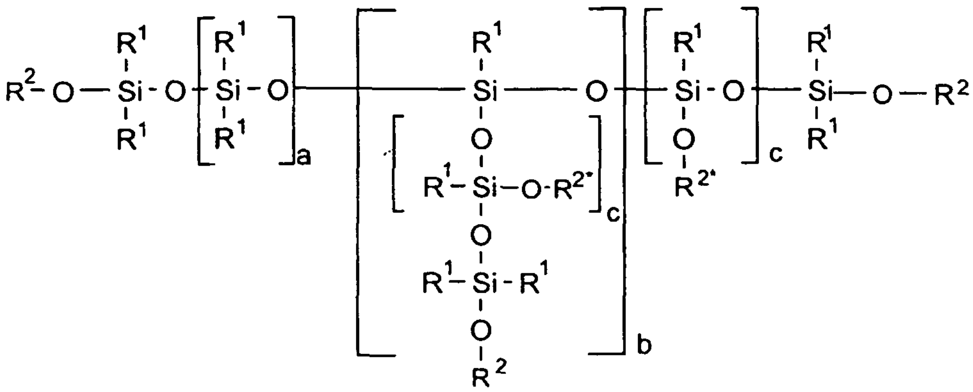

worin

$R^1$ unabhängig voneinander aliphatische oder aromatische $C_{1-20}$-Kohlenwasserstoffreste,
$R^2$, $R^{2*}$ unabhängig voneinander aliphatische Kohlenwasserstoffreste mit $\cong C_{18}$ bis $\cong C_{100}$ in statistischer Verteilung sind und ca. 50 bis 70 Gew.-% der Gesamtverteilung ausmachen,
a = 1 bis 500,
b = 0 bis 50,
c = 0 bis 50

sind, als Additive zur Oberflächenvergütung in Polyolefinen und für Folien, hergestellt aus Polyamiden.

2. Verwendung von organomodifizierten Polysiloxanen gemäß Anspruch 1, **dadurch gekennzeichnet, dass** mindestens 90 % der Reste $R^1$ Methylreste sind.

3. Verwendung von organomodifizierten Polysiloxanen gemäß den Ansprüchen 1 und 2, **dadurch gekennzeichnet, dass** $R^2$, $R^{2*}$ aliphatische Kohlenwasserstoffreste mit $\cong C_{20}$ bis $C_{40}$ sind.

4. Verwendung von organomodifizierten Polysiloxanen gemäß den Ansprüchen 1 bis 3 **dadurch gekennzeichnet, dass** a 5 bis 100 ist und b und c = 0 sind.

5. Verwendung von organomodifizierten Polysiloxanen gemäß den Ansprüchen 1 bis 3 **dadurch gekennzeichnet, dass** a 10 bis 50 und b und c = 0 ist.

6. Verwendung der Verbindungen gemäß der allgemeinen Formel (I) als Prozessadditive bei der Herstellung von gegebenenfalls Füllstoffen enthaltenden Polyolefinfolien in Konzentrationen von 0,001 bis 5 Gew.-% zur Verbesserung der Oberflächeneigenschaften von Polyolefinen, wie beispielsweise Reibungskoeffizient, Kratzfestigkeit, Rauhigkeit, Hydrophobierung, Witterungsbeständigkeit, Gleitfähigkeit, Trennwirkung und Abriebsbeständigkeit.

7. Verwendung von gegebenenfalls Füllstoffe enthaltenden Compounds, enthaltend Polyolefine mit 0,3 bis 5 Gew.-%mindestens einer organomodifizierten Siloxanverbindung der allgemeinen Formel (I), zur Herstellung von Folien mittels Extrusion, Coextrusion, Flachfolien- und Profilextrusion.

8. Verwendung von Folien, hergestellt gemäß Anspruch 6, als Trenn- bzw. Releasefolien für Anwendungen im Bereich Verpackungen, Aufkleber, Klebestreifen, Trennfolien, Trägerfolien, Etiketten, Tapeten, Hygieneartikel, Schutzfolien, Fußbodenplatten und Heftpflaster.

9. Verwendung von organomodifizierten Polysiloxanen gemäß den Ansprüchen 1 bis 3 für Folien hergestellt aus Polyethylen und Polypropylen.

## Claims

1. Use of organomodified polysiloxanes of the general formula (I)

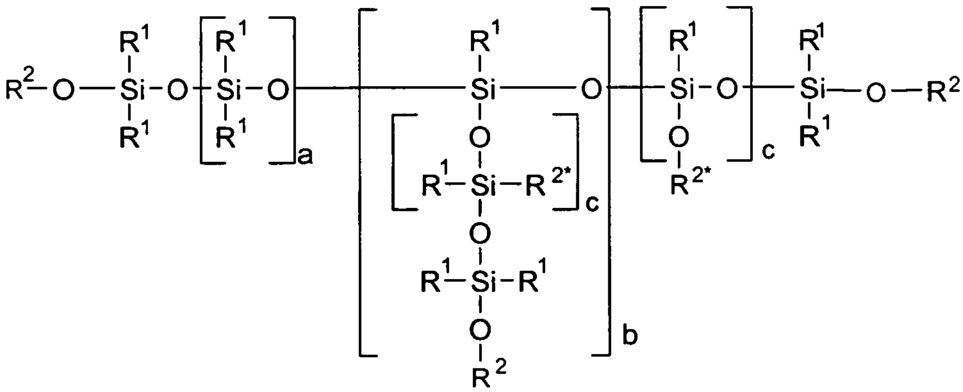

in which

$R^1$ independently at each occurrence is an aliphatic or aromatic $C_{1-20}$ hydrocarbon radical,
$R^2$, $R^{2*}$ independently of one another are aliphatic hydrocarbon radicals with ≅ $C_{18}$ to ≅ $C_{100}$ in statistical distribution and account for about 50 to 70% by weight of the overall distribution,
a = 1 to 500,
b = 0 to 50,
c = 0 to 50

as additives for surface enhancement in polyolefins and for films produced from polyamides.

2. Use of organomodified polysiloxanes according to Claim 1, **characterized in that** at least 90% of the radicals $R^1$ are methyl radicals.

3. Use of organomodified polysiloxanes according to Claims 1 and 2, **characterized in that** $R^2$ and $R^{2*}$ are aliphatic hydrocarbon radicals with ≅ $C_{20}$ to $C_{40}$.

4. Use of organomodified polysiloxanes according to Claims 1 to 3, **characterized in that** a is 5 to 100 and b and c = 0.

5. Use of organomodified polysiloxanes according to Claims 1 to 3, **characterized in that** a is 10 to 50 and b and c = 0.

6. Use of the compounds of the general formula (I) as in-process additives in the production of filled or unfilled polyolefin films at concentrations of 0.001 to 5% by weight for improving the surface properties of polyolefins, such as friction coefficient, scratch resistance, roughness, water repellency, weathering stability, slip properties, release effect, and abrasion resistance.

7. Use of filled or unfilled compound formulations comprising polyolefins with 0.3 to 5% by weight of at least one organomodified siloxane compound of the general formula (I) for producing films by means of extrusion, coextrusion, flat film extrusion or profile extrusion.

8. Use of films produced according to Claim 6 as release films for applications in the areas of packaging, stickers, adhesive strips, release films, backing films, labels, wall coverings, hygiene articles, protective films, flooring slabs, and adhesive plasters.

9. Use of organomodified polysiloxanes according to Claims 1 to 3 for films produced from polyethylene and polypropylene.

## Revendications

1. Utilisation de polysiloxanes organomodifiés de formule générale (I)

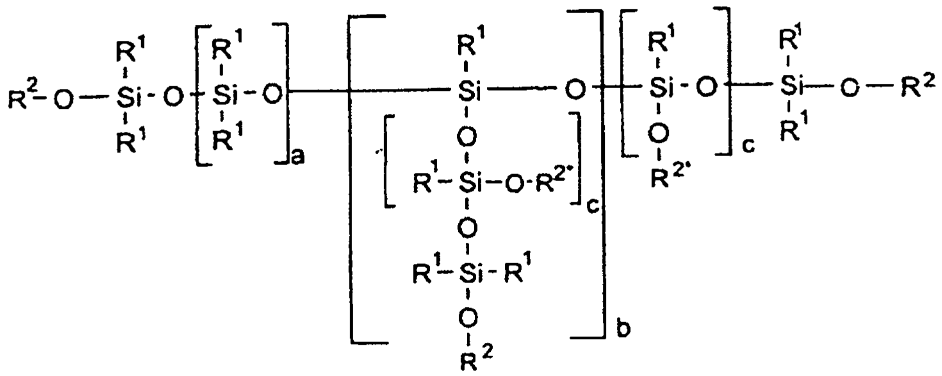

dans laquelle

$R^1$ représente, indépendamment l'un de l'autre, des radicaux hydrocarbonés aliphatiques ou aromatiques en $C_1$ à $C_{20}$,
$R^2$, $R^{2*}$ représentent, indépendamment l'un de l'autre, des radicaux hydrocarbonés aliphatiques en $\cong C_{18}$ à $\cong C_{100}$ dans une répartition statistique et représentent environ 50 à 70% en poids de la répartition totale,
a = 1 à 500,
b = 0 à 50,
c = 0 à 50

comme additifs pour l'amélioration de surface dans des polyoléfines et pour des feuilles, préparées à partir de polyamides.

2. Utilisation de polysiloxanes organomodifiés selon la revendication 1, **caractérisée en ce qu'**au moins 90% des radicaux $R^1$ sont des radicaux méthyle.

3. Utilisation de polysiloxanes organomodifiés selon les revendications 1 et 2, **caractérisée en ce que** $R^2$, $R^{2*}$ représentent des radicaux hydrocarbonés aliphatiques en $\cong C_{20}$ à $C_{40}$.

4. Utilisation de polysiloxanes organomodifiés selon les revendications 1 à 3, **caractérisée en ce que** a vaut 5 à 100

et b et c = 0.

5. Utilisation de polysiloxanes organomodifiés selon les revendications 1 à 3, **caractérisée en ce que** a vaut 10 à 50 et b et c = 0.

6. Utilisation des composés selon la formule générale (I) comme additifs de processus lors de la préparation de feuilles de polyoléfine contenant le cas échéant des charges en des concentrations de 0,001 à 5% en poids pour améliorer les propriétés de surface de polyoléfines, telles que par exemple le coefficient de frottement, la résistance aux griffes, la rugosité, l'hydrofugation, la résistance aux conditions atmosphériques, l'aptitude au glissement, l'effet de démoulage et la résistance à l'usure.

7. Utilisation de compounds contenant le cas échéant des charges, contenant des polyoléfines comprenant 0,3 à 5% en poids d'au moins un composé de siloxane organomodifié de formule générale (I), pour la préparation de feuilles par extrusion, coextrusion, extrusion de feuilles planes et de profilés.

8. Utilisation de feuilles préparées selon la revendication 6 comme feuilles de séparation ou anti-adhésives pour des utilisations dans le domaine des emballages, des autocollants, des bandes adhésives, des feuilles de séparation, des feuilles support, des étiquettes, des papiers peints, des articles hygiéniques, des feuilles de protection, des plaques pour planchers et des pansements adhésifs.

9. Utilisation de polysiloxanes organomodifiés selon les revendications 1 à 3 pour des feuilles préparées à partir de polyéthylène et de polypropylène.